# EUROPEAN PATENT APPLICATION

(11) **EP 4 811 170 A1**
(43) Date of publication of application: **23.09.2026**
(21) Application number: 25226354.6
(22) Date of filing: 22.12.2025
(51) Int. Cl.: G06F 16/36, G06N 5/025

(54) **METHOD AND SYSTEM FOR ONTOLOGY GENERATION AND EXTRACTING ASSOCIATED RULES USING META-MODELS**

(30) Priority: 17.03.2025 IN 202521023531
(71) Applicant: Tata Consultancy Services Limited, Maharashtra (IN)
(72) Inventor: DUNGARWAL, Pragati Hiralal, 411028 Pune, Maharashtra (IN); DAS, Prasenjit, 700156 Kolkata, West Bengal (IN); PURAO, Nikhil Anant, 411057 Pune, Maharashtra (IN); DEV, Sachin, 201309 Noida, Uttar Pradesh (IN); BASAVARSU, Purushottham Gautham, 411028 Pune, Maharashtra (IN)
(74) Representative: Goddar, Heinz J.

(57) **Abstract**

Existing techniques for ontology generation and extraction associated rules typically involving custom pattern-matching algorithms are complex and require significant human intervention to design and implement. Embodiments herein provide a method and system for generation of the ontology and extracting the associated rules using meta-models. The method comprises user defining a domain using the meta-model in a JavaScript Object Notation (JSON) format for tailored and precise generation of the ontology. A plurality of prompts is generated using the meta-model, a configuration file, and a domain specific corpus, and processed using a large language model (LLM) to generate the ontology. Further the generated ontology along with the domain specific corpus is used to extract associated rules effectively.

## Description

### CROSS-REFERENCE TO RELATED APPLICATIONS AND PRIORITY

The present application claims priority to Indian application no. 202521023531, filed on March 17, 2025.

### TECHNICAL FIELD

The disclosure herein generally relates to Natural Language Processing, and, more particularly, to method and system for ontology generation and extracting associated rules using meta-models.

### BACKGROUND

Organizations involve integrating and standardizing data sources across various systems, processes, and business functions. Organizations adopt more sophisticated digital infrastructures, often based on semantic technologies, and they increasingly need a streamlined way to connect disparate data sources and ensure consistency across their operations. At the heart of this challenge lies the creation of ontologies, which are structured representations of knowledge, and the extraction of associated rules, both of which are essential for leveraging data to its fullest potential.

Creating the ontologies and extracting the associated rules is a resource-intensive task, usually performed by subject matter experts who invest weeks or even months into the process. The work requires deep domain knowledge, meticulous attention to detail, and iterative refinement to ensure accuracy. However, this manual approach is not only slow but also prone to human error, making it difficult to maintain accuracy and consistency across complex and dynamic datasets. Additionally, the manual approaches do not scale well, which presents a significant limitation for organizations dealing with increasing amounts of data. The process of extracting this valuable information from unstructured data has traditionally been cumbersome and inefficient.

Although automated methods have been explored to streamline generating the ontologies and extracting the associated rules, these methods often rely on custom-built pattern-matching algorithms. While automated methods can handle certain types of structured data, they are typically difficult to design and require substantial human intervention to adapt to different data formats and contexts. Moreover, the automated methods tend to be fragile and fail when the structure or formatting of documents changes even slightly. This fragility makes these solutions of the automated methods unreliable and introduces inefficiencies in the process, and hence manual intervention is required to correct and refine the results.

### SUMMARY

Embodiments of the present disclosure present technological improvements as solutions to one or more of the above-mentioned technical problems recognized by the inventors in conventional systems. For example, in one embodiment, a method for ontology generation and extracting associated rules using meta-models. The method includes receiving a configuration file, a domain specific corpus, and a meta-model pertaining to a domain comprising a subject area, and a plurality of entities, wherein a structure of the subject area comprises a plurality of seeds, a meta class, a subject area definition, a plurality of attributes, a plurality of associations, an inheritable flag, wherein the structure of plurality of entities comprises a plurality of entity names, the meta class, a plurality of entity definitions, the plurality of attributes, the plurality of associations, wherein the plurality of attributes comprises a plurality of attribute names, a plurality of attribute definitions, wherein the plurality of associations comprises a plurality of association names, a plurality of association definitions, a plurality of source role names, a plurality of target role names, a plurality of target entity names, a plurality of cardinality values, and wherein the configuration file comprises a domain name, a subclass depth, a self-association depth, a chunk parameter, a predefined depth, and a predefined threshold value. Further the method includes creating a plurality of prompts comprising a subject area prompt, an inherited entities prompt, an attributes prompt, an associations prompt, and a list validation prompt, using the meta-model, the configuration file, and the domain specific corpus by: (a) creating the subject area prompt by replacing an entity class, a definition, and the domain, in a predefined subject area prompt template, using the meta-model and the configuration file, wherein the created subject area prompt is fed to a Large Language Model (LLM) to extract the plurality of seeds, (b) creating the inherited entities prompt based on the subclass depth in the configuration file and if the inheritable flag is enabled in the meta-model, by replacing the entity class, the definition, a parent name, and the domain in a predefined inherited entities prompt template, using the meta-model and the configuration file, wherein the created inherited entities prompt is fed to the LLM, to extract a plurality of inherited entities, (c) creating (304c) the association prompt based on the self-association depth in the configuration file, and the meta class, and the plurality of target entity names in the meta model, by replacing an association name, the definition, the source class, a target class, a target role, a source role, a source entity name, a cardinality, and the domain, in a predefined association prompt template using the meta-model and the configuration file, wherein the created association prompt is fed to the LLM, to extract the plurality of associations between (i) the plurality of seeds and the plurality of entities, and (ii) the plurality of inherited entities and the plurality of entities, (d) creating the attribute prompt by replacing the definition, an attribute, the meta class name, an entity, and the domain, in a predefined attributes prompt template, using the meta-model and the configuration file, wherein the created attribute prompt is fed to the LLM, to extract the plurality of attributes associated with the plurality of inherited entities and the plurality of entities, and creating the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities. Further the method includes feeding the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate a plurality of validation LLM responses. Further the method includes generating an ontology upon successful validation of the plurality of validation LLM responses, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model. Further the method includes extracting a plurality of valid Semantic Web Rule Language (SWRL) rules from the ontology and the domain specific corpus by: (a) preprocessing the domain specific corpus to generate a pre-processed text comprising a plurality of sentences, (b) joining and replacing the plurality of sentences in the generated pre-processed text using a co-reference algorithm, to generate a plurality of co-referenced sentences; (c) feeding the plurality of co-referenced sentences to the LLM, to obtain a plurality of rule contained sentences, (d) extracting a plurality of intermediate SWRL rules from the plurality of rule contained sentences using a helper schema and a three-shot prompting, and (e) extracting the plurality of valid SWRL rules from the plurality of intermediate SWRL rules.

In another aspect, a system for ontology generation and extracting associated rules using meta-models is provided. The system comprising: a memory (102) storing instructions; one or more communication interfaces (106); and one or more hardware processors (104) coupled to the memory (102) via the one or more communication interfaces (106), wherein the one or more hardware processors (104) are configured by the instructions to: receive a configuration file, a domain specific corpus, and a meta-model pertaining to a domain comprising a subject area, and a plurality of entities, wherein a structure of the subject area comprises a plurality of seeds, a meta class, a subject area definition, a plurality of attributes, a plurality of associations, an inheritable flag, wherein the structure of plurality of entities comprises a plurality of entity names, the meta class, a plurality of entity definitions, the plurality of attributes, the plurality of associations, wherein the plurality of attributes comprises a plurality of attribute names, a plurality of attribute definitions, wherein the plurality of associations comprises a plurality of association names, a plurality of association definitions, a plurality of source role names, a plurality of target role names, a plurality of target entity names, a plurality of cardinality values, and wherein the configuration file comprises a domain name, a subclass depth, a self-association depth, a chunk parameter, a predefined depth, and a predefined threshold value; create a plurality of prompts comprising a subject area prompt, an inherited entities prompt, an attributes prompt, an associations prompt, and a list validation prompt, using the meta-model, the configuration file, and the domain specific corpus by: (a) creating the subject area prompt by replacing an entity class, a definition, and the domain, in a predefined subject area prompt template, using the meta-model and the configuration file, wherein the created subject area prompt is fed to a Large Language Model (LLM) to extract the plurality of seeds; (b) creating the inherited entities prompt based on the subclass depth in the configuration file and if the inheritable flag is enabled in the meta-model, by replacing the entity class, the definition, a parent name, and the domain in a predefined inherited entities prompt template, using the meta-model and the configuration file, wherein the created inherited entities prompt is fed to the LLM, to extract a plurality of inherited entities; (c) creating the association prompt based on the self-association depth in the configuration file, and the meta class, and the plurality of target entity names in the meta model, by replacing an association name, the definition, the source class, a target class, a target role, a source role, a source entity name, a cardinality, and the domain, in a predefined association prompt template using the meta-model and the configuration file, wherein the created association prompt is fed to the LLM, to extract the plurality of associations between (i) the plurality of seeds and the plurality of entities, and (ii) the plurality of inherited entities and the plurality of entities; (d) creating the attribute prompt by replacing the definition, an attribute, the meta class name, an entity, and the domain, in a predefined attributes prompt template, using the meta-model and the configuration file, wherein the created attribute prompt is fed to the LLM, to extract the plurality of attributes associated with the plurality of inherited entities and the plurality of entities; and (e) creating the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities; feed the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate a plurality of validation LLM responses; generate an ontology upon successful validation based on the plurality of validation LLM responses, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model; and extract a plurality of valid Semantic Web Rule Language (SWRL) rules from the ontology and the domain specific corpus by: (a) preprocessing the domain specific corpus to generate a pre-processed text comprising a plurality of sentences; (b) joining and replacing the plurality of sentences in the generated pre-processed text using a co-reference algorithm, to generate a plurality of co-referenced sentences; (c) feeding the plurality of co-referenced sentences to the LLM, to obtain a plurality of rule contained sentences; (d) extracting a plurality of intermediate SWRL rules from the plurality of rule contained sentences using a helper schema and a three-shot prompting; and (e) extracting the plurality of valid SWRL rules from the plurality of intermediate SWRL rules.

In yet another aspect, there are provided one or more non-transitory machine-readable information storage mediums comprising one or more instructions which when executed by one or more hardware processors cause a method for ontology generation and extracting associated rules using meta-models. The method includes receiving a configuration file, a domain specific corpus, and a meta-model pertaining to a domain comprising a subject area, and a plurality of entities, wherein a structure of the subject area comprises a plurality of seeds, a meta class, a subject area definition, a plurality of attributes, a plurality of associations, an inheritable flag, wherein the structure of plurality of entities comprises a plurality of entity names, the meta class, a plurality of entity definitions, the plurality of attributes, the plurality of associations, wherein the plurality of attributes comprises a plurality of attribute names, a plurality of attribute definitions, wherein the plurality of associations comprises a plurality of association names, a plurality of association definitions, a plurality of source role names, a plurality of target role names, a plurality of target entity names, a plurality of cardinality values, and wherein the configuration file comprises a domain name, a subclass depth, a self-association depth, a chunk parameter, a predefined depth, and a predefined threshold value. Further the method includes creating a plurality of prompts comprising a subject area prompt, an inherited entities prompt, an attributes prompt, an associations prompt, and a list validation prompt, using the meta-model, the configuration file, and the domain specific corpus by: (a) creating the subject area prompt by replacing an entity class, a definition, and the domain, in a predefined subject area prompt template, using the meta-model and the configuration file, wherein the created subject area prompt is fed to a Large Language Model (LLM) to extract the plurality of seeds, (b) creating the inherited entities prompt based on the subclass depth in the configuration file and if the inheritable flag is enabled in the meta-model, by replacing the entity class, the definition, a parent name, and the domain in a predefined inherited entities prompt template, using the meta-model and the configuration file, wherein the created inherited entities prompt is fed to the LLM, to extract a plurality of inherited entities, (c) creating (304c) the association prompt based on the self-association depth in the configuration file, and the meta class, and the plurality of target entity names in the meta model, by replacing an association name, the definition, the source class, a target class, a target role, a source role, a source entity name, a cardinality, and the domain, in a predefined association prompt template using the meta-model and the configuration file, wherein the created association prompt is fed to the LLM, to extract the plurality of associations between (i) the plurality of seeds and the plurality of entities, and (ii) the plurality of inherited entities and the plurality of entities, (d) creating the attribute prompt by replacing the definition, an attribute, the meta class name, an entity, and the domain, in a predefined attributes prompt template, using the meta-model and the configuration file, wherein the created attribute prompt is fed to the LLM, to extract the plurality of attributes associated with the plurality of inherited entities and the plurality of entities, and creating the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities. Further the method includes feeding the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate a plurality of validation LLM responses. Further the method includes generating an ontology upon successful validation of the plurality of validation LLM responses, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model. Further the method includes extracting a plurality of valid Semantic Web Rule Language (SWRL) rules from the ontology and the domain specific corpus by: (a) preprocessing the domain specific corpus to generate a pre-processed text comprising a plurality of sentences, (b) joining and replacing the plurality of sentences in the generated pre-processed text using a co-reference algorithm, to generate a plurality of co-referenced sentences; (c) feeding the plurality of co-referenced sentences to the LLM, to obtain a plurality of rule contained sentences, (d) extracting a plurality of intermediate SWRL rules from the plurality of rule contained sentences using a helper schema and a three-shot prompting, and (e) extracting the plurality of valid SWRL rules from the plurality of intermediate SWRL rules.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for ontology generation and extracting associated rules using meta-models, in accordance with some embodiments of the present disclosure.
FIG. 2 depicts an architecture diagram for the ontology generation and extracting the associated rules using the meta-models, using the system of FIG. 1, according to some embodiments of the present disclosure.
FIGS. 3A, 3B, and 3C depict a flow diagram for the ontology generation and extracting the associated rules using the meta-models, using the system of FIG. 1, according to some embodiments of the present disclosure.
FIG. 4 depicts a block diagram for generating the ontology using the meta-model, a configuration file, an embedding model and optionally a domain specific corpus, using the system of FIG. 1, according to some embodiments of the present disclosure.
FIG. 5 depicts a block diagram for extracting a plurality of valid Semantic Web Rule Language (SWRL) rules from the ontology and the domain specific corpus, according to some embodiments of the present disclosure.
FIG. 6 depicts a block diagram for generation of the plurality of valid SWRL rules, using Large Language Model (LLM), according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Creating ontologies from general world knowledge or a domain specific corpus has traditionally been a time-intensive process requiring significant expert intervention. This manual approach is not only labor-intensive but also prone to errors. Automated ontology extraction methods discussed in the literature typically rely on rule-based techniques. However, these approaches struggle to scale effectively as the underlying data evolves. Further extracting rules from the domain specific corpus demands a deep understanding of the text's semantics, making the manual creation of such rules both time-consuming and cumbersome. Moreover, an automated approach for rule generation has not been extensively explored in the literature. The emergence of Large Language Models (LLMs) with advanced text comprehension capabilities offers a new avenue for automating rule extraction.

Embodiments herein provide a method and system for ontology generation and extracting associated rules using meta-models. User defines the domain using a meta-model in a JavaScript Object Notation (JSON) format for tailored and precise generation of the ontology. A plurality of prompts is generated using the meta-model, a configuration file, and a domain specific corpus. Further, processed using a large language model (LLM) to generate the ontology. The generated ontology along with the domain specific corpus is used to extract associated rules effectively.

Knowledge extraction streamlines process of generating the ontologies and extracting the associated rules, which are critical for integrating and standardizing data across various systems, processes, and business functions. As organizations continue to adopt more sophisticated digital infrastructures, often based on semantic technologies, they increasingly need a streamlined way to connect disparate data sources and ensure consistency across their operations. At the heart of this challenge lies the generation of the ontologies, which are structured representations of knowledge, and the extraction of the associated rules, both of which are essential for leveraging data to its fullest potential. By reducing the need for manual effort, the process not only accelerates the generation of the ontology and extraction of association rules but also improves the accuracy and scalability of a task handled. The ontologies are generated by leveraging the domain specific corpus from a wide variety of data sources, including both public and proprietary information. The extracted knowledge from the generated ontologies and the extracted associated rules can be automatically converted into formats that are tailored to meet the specific needs of an enterprise, ensuring that the extracted knowledge is both relevant and immediately usable.

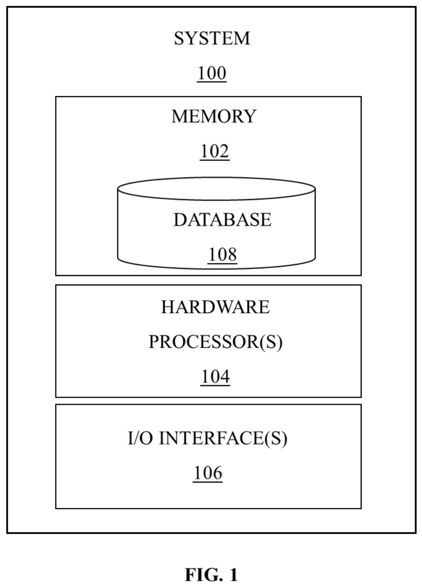

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 is a functional block diagram of a system 100 for ontology generation and extracting associated rules using meta-models. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on the configuration file, the domain specific corpus, the meta-model, and the like. The memory 102 further comprises a plurality of modules (not shown for various technique(s) such as the LLM, an embedding model, one or more Natural Language Processing (NLP) libraries, a co-reference algorithm and the like. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

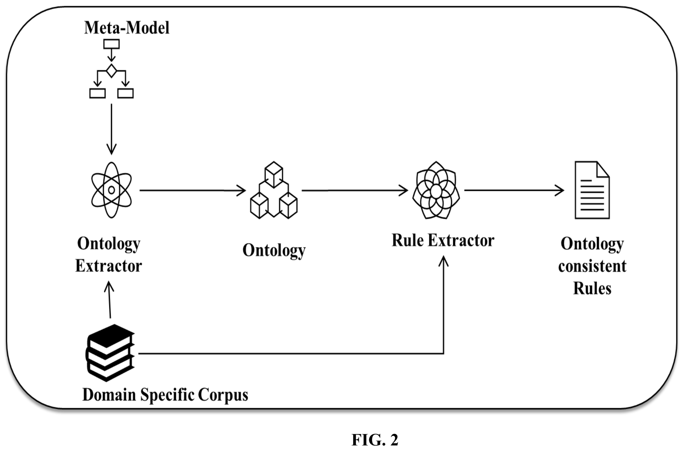

FIG. 2 depicts an architecture diagram of the system 100 for the ontology generation and extracting the associated rules using the meta-models, according to some embodiments of the present disclosure. An ontology extractor component in FIG. 2 comprises creating the plurality of prompts comprising a subject area prompt, an inherited entities prompt, an attributes prompt, an associations prompt, and a list validation prompt, using the meta-model, the configuration file, and the domain specific corpus. The generated plurality of prompts extracts a plurality of seeds, a plurality of inherited entities, a plurality of attributes associated with the plurality of inherited entities and a plurality of entities, a plurality of associations between (i) the plurality of seeds and the plurality of entities, and (ii) plurality of inherited entities and the plurality of entities, using the LLM. The list validation prompt is fed to the LLM to validate the plurality of seeds, the plurality of inherited entities, the plurality of attributes associated with the plurality of inherited entities and the plurality of entities, the plurality of associations between (i) the plurality of seeds and the plurality of entities, and (ii) the plurality of inherited entities and the plurality of entities, generating the plurality of validation LLM responses. The ontology is generated upon successful validation based on the plurality of LLM responses, using the plurality of seeds, the plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and a structure of the meta-model. Then a plurality of valid Semantic Web Rule Language (SWRL) rules which are ontology consistent rules extracted from the domain specific corpus and aligned according to the generated ontology via a rule extractor.

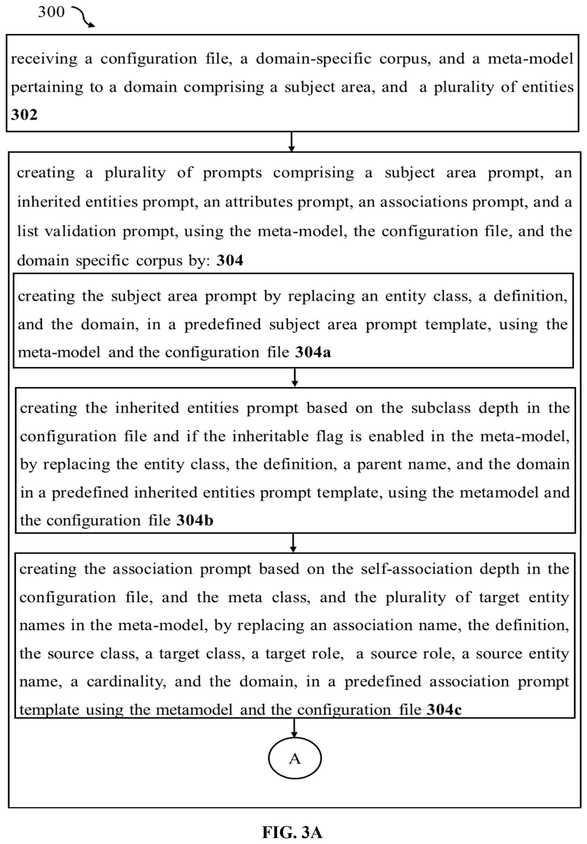

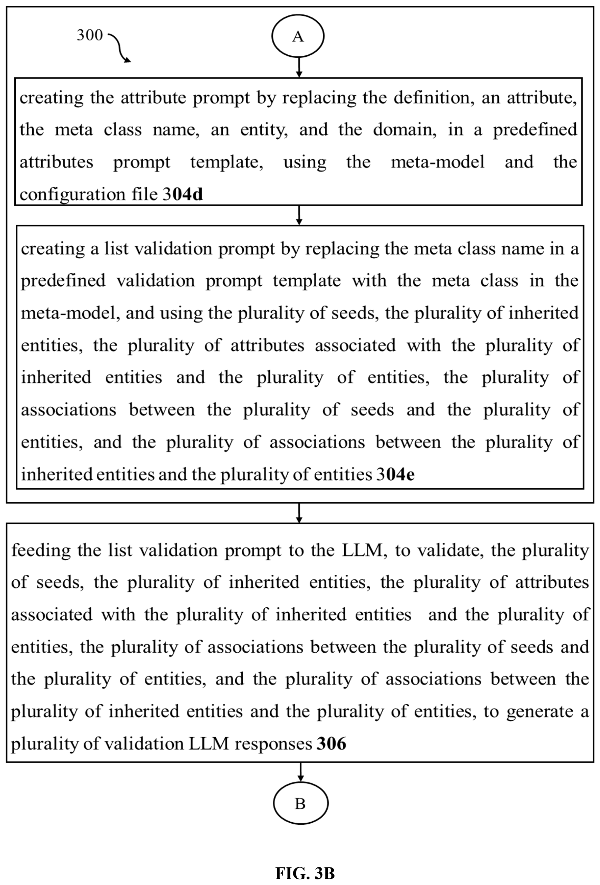

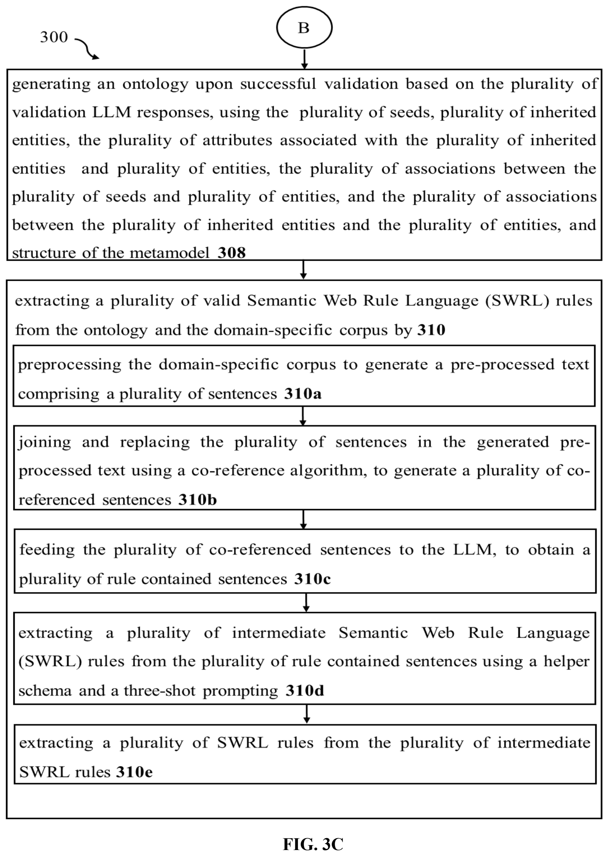

FIGS. 3A, 3B, and 3C is a flow diagram depicting a method 300 for the ontology generation and extracting the associated rules using the meta-models, using the system of FIG. 1, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIGS. 3A, 3B, and 3C. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Referring to steps of FIG. 3A, at step 302 of the method 300, the one or more hardware processors 104 are configured to receive the configuration file, the domain specific corpus, and the meta-model pertaining to the domain comprising the subject area, and the plurality of entities. The structure of the subject area comprises the plurality of seeds, a meta class, a subject area definition, the plurality of attributes, the plurality of associations, and an inheritable flag. The structure of plurality of entities comprises a plurality of entity names, the meta class, a plurality of entity definitions, the plurality of attributes, the plurality of associations. The plurality of attributes comprises a plurality of attribute names, a plurality of attribute definitions. The plurality of associations comprises a plurality of association names, a plurality of association definitions, a plurality of source role names, a plurality of target role names, a plurality of target entity names, a plurality of cardinality values. The configuration file comprises a domain name, a subclass depth, a self-association depth, a chunk parameter, a predefined depth, and a predefined threshold value.

The disclosed method 300 is highly robust and adaptable for generation of the ontology, giving the users unprecedented control and flexibility. At the core of this flexibility is the ability for users to define the domain of a target ontology by specifying the meta-model in a simple JSON format. This JSON-based-meta-model acts as a blueprint, allowing users to clearly outline scope, the structure, and components of the ontology that is needed, whether it's for a specific business area, industry, or data domain. This level of customization enables users to generate the ontologies that are not only tailored to their precise requirements but also capable of reflecting the complexities and nuances of the domain working within.

The disclosed method 300 offers flexibility by allowing the users to choose how the ontology to be populated either from the domain specific corpus of text or by leveraging the world knowledge embedded in the LLM. This enables that depending on the user's preferences or needs, the disclosed method 300 can draw directly from a targeted corpus, such as internal documents, industry reports, or other domain-specific resources, to populate the ontology with highly specific and contextually relevant information. Alternatively, users can opt to populate the ontology using the LLM's broader knowledge base, which is derived from a vast range of publicly available data sources, providing a more general or comprehensive perspective. Hence the domain specific corpus is optional input to the ontology extractor. This dual-option approach ensures that users have the control to either stay within the boundaries of curated knowledge set or to tap into the LLM's expansive understanding of the world. The ability to choose between these two sources allows the ontology generation process to be fine-tuned according to the specific goals of the user, whether they need highly focused, domain-specific knowledge or a more generalized representation of information. This flexibility is highly adaptable for various use cases, from specialized business applications to broader, cross-domain knowledge integration.

The exemplary meta-model for "Requirements" is depicted as follows

```
"SubjectAreas": [
  {
  "name": "Requirements",
  "seeds": ["performance requirement"],
  "definition": "A requirement is a formal statement of a need or a necessary
  condition that a particular design, product, or process must meet. It covers various
  types, including functional, non-functional, performance, and specific domain-
  related requirements such as airframe requirements in aerospace engineering.",
  "inheritable": false,
  "attributes": [
  {
  "name": "name",
  "type": "string",
  "definition": "A unique identifier for the requirement."
  },
  {
  "name": "description",
  "type": "string",
  "definition": "A detailed description of the requirement."
  }
  ],
  "associations": [
  {
  "name": "Requirement-Entity",
  "definition": "Associates a requirement with the relevant entity.",
  "source_role": {
  "name": "Requirement",
  "cardinality": "one"
  }
```

The subject area represents broad conceptual categories within the meta-model that helps organize and structure knowledge based on key aspects of the domain. They can be customized to suit any specific domain's needs. For example, Requirements: the subject area focused on defining "Requirements" within the given domain, providing a structured foundation for organizing information about various types of requirement or domain-specific needs.

The plurality of seeds is used as root instances to limit search space and initiate the knowledge extraction process. The plurality of seeds are specific examples or initial instances within the subject area (e.g., "Performance Requirement" as a seed in the "Requirements" subject area). The plurality of seeds act as root instances, focusing the extraction process on relevant entities, relationships, and attributes within the domain. The plurality of seeds helps to restrict the search space to the plurality of entities related to the selected examples, ensuring that knowledge extraction remains targeted and efficient. This approach narrows the scope, avoiding irrelevant information and focusing on the plurality of entities aligned with the provided plurality of seeds. If the plurality of seeds is not specified by the user, the disclosed method automatically prompts for seed examples based on the meta class in the meta-model and the domain in the configuration file using the subject area prompt. The subject area definition guides this prompting process, helping to suggest the appropriate plurality of seeds for the plurality of entities for the subject area.

Each entity of the plurality of entities, each association of the plurality of associations and each attribute of the plurality of attributes within the meta-model is accompanied by the associated plurality of entity definitions, the associated plurality of association definitions, and the associated plurality of attribute definitions that describes its role and significance in the domain. The plurality of entity definitions, the plurality of association definitions, and the plurality of attribute definitions explain the purpose of each element, helping users understand how each part fits into the broader domain framework.

The plurality of entities represents distinct objects or concepts within the domain. Within a requirements subject area or any other domain-specific category, the plurality of entities are required. For example, Parameter (or Domain-Specific Entity): this entity represents parameters associated with equipment or equipment parts within the domain, such as temperature, pressure, weight, or length.

The plurality of attributes are properties or characteristics associated with the plurality of entities. The plurality of attributes provides additional information about the plurality of entities and their relationships. For example:
**Name:** The label identifying the entity or parameter.
**Description:** A brief explanation of the entity's purpose or function.
**Datatype:** The format of the data (e.g., string, float).
**Unit:** The measurement unit applicable to the parameter (e.g., psi for pressure).
**Default Value:** The initial value assigned if no specific value is provided.
**Max Value:** The upper limit for the parameter.
**Min Value:** The lower limit for the parameter.

The plurality of associations defines the relationships and connections between the plurality of entities within the meta-model. The plurality of associations illustrates how concepts are related and can be customized based on the specific domain.
For example:
**Requirement-Parameter:** Links specific requirements to their associated parameters.
**Requirement-Entity:** Connects operational requirements to the plurality of t entities.
**Parameter-Entity:** Establishes relationships between parameters and the plurality of entities they affect.

If the plurality of seeds is an empty list in the meta-model, the plurality of seeds is extracted using the subject area prompt. A plurality of vector embeddings is generated from the domain specific corpus using the embedding model based on the availability of the domain specific corpus, and the generated plurality of vector embeddings of the domain specific corpus, and the chunk parameter in the configuration file are used in creating the plurality of prompts.

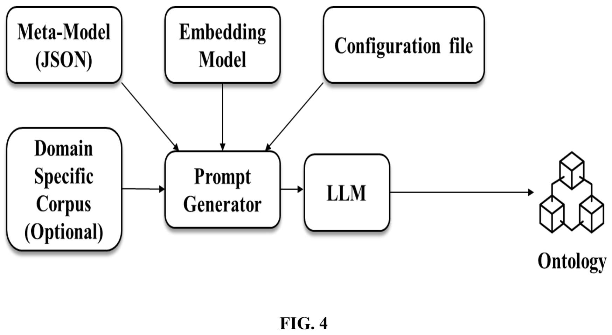

At step 304 of the method 300, the one or more hardware processors 104 are configured to create the plurality of prompts comprising the subject area prompt, the inherited entities prompt, the attributes prompt, the associations prompt, and the list validation prompt, using the meta-model, the configuration file, and the domain specific corpus. The plurality of prompts is generated via a prompt generator block as depicted in FIG. 4 using the meta-model, the configuration file, the embedding model and optionally the domain specific corpus, according to some embodiments of the present disclosure. In an embodiment, creating the plurality of prompts is explained through steps 304a to 304e.

At step 304a of the method, the one or more hardware processors are configured to create the subject area prompt comprises replacing (i) the entity class in a predefined subject area prompt template with the meta class from the meta-model, (ii) the definition in the predefined subject area prompt template with the subject area definition from the meta-model, and (iii) the domain in the predefined subject area prompt template with the domain name from the configuration file. The plurality of vector embeddings is also used in creating the subject area prompt if the domain specific corpus is available. The exemplary subject area prompt is as follows: Entity Type Definition: '{definition}'; What are the common {entity_class} used in the domain '{domain}'? Your responses must be relevant for the domain '{domain}'. An element must not be a subclass or specialization of another element or must not directly or indirectly be inherited from another element from the response. You will respond to the queries with one or more entity names if you know the answer. Do not respond if you do not know the answer and do not make up any answer. Follow the letter case Capitalisation for the element names and remove any extra leading or trailing non-alphabet characters. Provide the {entity_class} found in singular number. {format_instructions}. The {format_instructions} are a set of formal instructions for the LLM to produce a response in comma-separated list format. The subject area prompt is fed to the LLM to extract the plurality of seeds.

At step 304b of the method 300, if the subclass depth is equal to one in the configuration file, the one or more hardware processors are configured to create the inherited entities prompt comprises replacing (i) the entity class in a predefined inherited entities prompt template with the meta class from the meta-model, (ii) the definition in the predefined inherited entities prompt template with the subject area definition from the meta-model, (iii) the parent name in the predefined inherited entities prompt template with the plurality of seeds from the meta-model, and (iv) the domain in the predefined inherited entities prompt template with the domain name from the configuration file. If the subclass depth in the configuration file is greater than one, creating the inherited entities prompt comprises replacing (i) the entity class in the predefined inherited entities prompt template with the meta class from the meta-model, (ii) the definition in the predefined inherited entities prompt template with the subject area definition from the meta-model, (iii) the parent name in the predefined inherited entities prompt template with each the plurality of inherited entities, and (iv) the domain in the predefined inherited entities prompt template with the domain name from the configuration file. The created inherited entities prompt is fed to the LLM, to extract the plurality of inherited entities. The exemplary inherited entities prompt is as follows: Entity Type Definition: '{definition}'; What are the common {entity_class} used in the domain '{domain}' that are inherited from 'parent_name}', or that are sub-classes of '{parent_name}', or that are of sub-type of '{parent_name}'? Your responses must be relevant for the domain '{domain}'. An element must not be a subclass or specialization of another element or must not directly or indirectly be inherited from another element from the response and ensure not to repeat any compounds listed in previous responses. The responses must be direct descendant of the given entity. You will respond to the queries with one or more entity names if you know the answer. Do not respond if you do not know the answer and do not make up any answer. Follow the letter case Capitalisation for the element names and remove any extra leading or trailing non-alphabet characters. Provide the {entity_class} found in singular number. {format_instructions}.

At step 304c of the method 300, if the self-association depth is equal to zero in the configuration file, the one or more hardware processors are configured to create the association prompt comprises replacing (i) the association name in a predefined association prompt template with each of the plurality of association names from the meta-model, (ii) the definition in the predefined association prompt template with each of the plurality of association definitions from the meta-model, (iii) the source class in the predefined association prompt template with the meta class from the meta-model, (iv) the target class, the target role, the source role, the cardinality in the predefined association prompt template with each of the plurality of target entity names, each of the plurality of target role names, each of plurality of the source role names, and each of the plurality of cardinality values from the meta-model, (v) the source entity name in the predefined association prompt template with the plurality of seeds and the plurality of inherited entities, and (vi) the domain in the predefined association prompt template with the domain name from the configuration file. If the self-association depth is greater than zero in the configuration file, based on meta class and the plurality of target entity names in the meta-model, the association prompt is created by replacing (i) the association name in the predefined association prompt template with each of the plurality of association names from the meta-model, (ii) the definition in the predefined association prompt template with each of the plurality of association definitions from the meta-model, (iii) the source class in the predefined association prompt template with the meta class from the meta-model, (iv) the target class, the target role, the source role, the cardinality in the predefined association prompt template with each of the plurality of target entity names, each of the plurality of target role names, each of plurality of the source role names, and each of the plurality of cardinality values from the meta-model, (v) the source entity name in the predefined association prompt template with each of the plurality of associations between (a) the plurality of seeds and the plurality of entities, and (b) the plurality of inherited entities and the plurality of entities, and (vi) the domain in the predefined association prompt template with the domain name from the configuration file.

The created association prompt is fed to the LLM, to extract the plurality of associations between (i) the plurality of seeds and the plurality of entities, and (ii) the plurality of inherited entities and the plurality of entities. The exemplary association prompt is as follows: Association Name: '{association_name}'; Association Definition: '{definition}'; Source entity type: '{source_class}'; Target entity type: '{target_class}'; Source role: '{source_role}'; Target role: '{target_role}'; Target role cardinality: '{one_or_many}'; What are the most common '{target_role}'(s) of type '{target_class}' associated with the source entity '{source_entity_name}'? Your responses must be relevant for the domain '{domain}'. You will respond to the queries with one or more entity names if you know the answer. Do not respond if you do not know the answer and do not make up any answer. Follow the letter case Capitalisation for the element names. Provide the {target_class} found in singular number. {format_instructions}.

Referring to steps of FIG. 3B, at step 304d of the method 300, the one or more hardware processors are configured to create the attribute prompt comprises replacing (i) the definition in a predefined attribute prompt template with each of the plurality of entity definitions from the meta-model, (ii) the attribute in the predefined attribute prompt template with each of the plurality of attribute names and each of the plurality of attribute definitions from the meta-model, (iii) the meta class name in the predefined attribute prompt template with the each of the plurality of entity names from the meta-model, (iv) the entity in the predefined attribute prompt template with each of the plurality of associations between (a) the plurality of seeds and the plurality of entities, and (b) the plurality of inherited entities and the plurality of entities, and (v) the domain in a predefined attribute prompt template with the domain name from the configuration file. The created attribute prompt is fed to the LLM, to extract the plurality of attributes associated with the plurality of inherited entities and the plurality of entities. The exemplary attribute prompt is as follows: Entity Type Definition: '{definition}'; what are the values for the {attribute_value} for {meta_class} '{entity_name}'? Your responses must be relevant for the domain '{domain}'. Follow the letter case Capitalisation for the element names and remove any extra leading or trailing non-alphabet characters. Provide the parameters with less than 45 characters and numeric. {format_instructions}.

At step 304e of the method 300, the one or more hardware processors are configured to create the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities. The exemplary list validation prompt is as follows: Is the text mentioned below either a comma-separated list or a single string of entity names of type {meta_class}? Respond with Yes or No. In case of any ambiguity or uncertainty, respond with No. text: '{text}'. In this case, the text will the generated response from the LLM i.e. the plurality of seeds for the subject area prompt,; the plurality of inherited entities for the inherited entities prompt, , the plurality of attributes associated with the plurality of inherited entities and the plurality of entities for the attribute prompt,; and the plurality of associations between the plurality of seeds and the plurality of entities, and the plurality of associations between the plurality of inherited entities and the plurality of entities for the association prompt.

Once the plurality of prompts are created at step 304,, then at step 306 of the method 300, the one or more hardware processors 104 are configured to feed the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate the plurality of validation LLM responses. If a response of the plurality validation LLM responses is true (yes), then the validation is successful. If the response of the plurality of LLM is false (No), then the validation is unsuccessful, the response is discarded.

Upon successful validation of the plurality of validation LLM responses, referring to steps of FIG. 3C, at step 308 of the method 300, the one or more hardware processors 104 are configured to generate the ontology, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model. The ontology comprises the meta class, the plurality of seeds, the plurality of inherited entities, the plurality of attributes associated with the plurality of inherited entities and the plurality of entities, and the plurality of associations between the plurality of seeds and the plurality of entities, and the plurality of associations between the plurality of inherited entities and the plurality of entities. The ontology is enriched with the domain specific corpus captured ensuring that it is a valuable resource for decision-making, information retrieval, and deep understanding of the domain. A name field of the ontology represents a label or identifier for the element in a model. It is typically a descriptive name that reflects the concept, entity, or parameter being modelled. Example: "name": "performance requirement", "name": "HP Compressor system", "name": "pipe pressure". The meta class of the ontology defines the type or category of an element. It provides context for how the element fits into the larger structure of the ontology, representing whether the item is a requirement, entity, or parameter. This helps in distinguishing different levels of abstraction within the model, such as differentiating between broader entities (like systems) and more granular parameters (like pressures or speeds). Example: "meta_class": "Requirements", "meta_class": "Entity", "meta_class": "Parameter". The plurality of attributes captures additional information or characteristics associated with the element. The plurality of attributes provides more detailed data, such as units, values, or conditions. The plurality of attributes are usually key-value pairs that give context or constraints to the element. The plurality of attributes helps to define measurable qualities of parameters or the status of the entity under certain conditions. The plurality of associations between the plurality of seeds and the plurality of entities, and the plurality of associations between the plurality of inherited entities and the plurality of entities defines relationships between different elements in the model. The plurality of associations typically shows how one entity or parameter is connected to others within the structure, revealing the dependencies or hierarchies that exist within the model. The plurality of associations is often nested, showing complex relationships between the plurality of entities and their parameters. Each association of the plurality of associations may involve the plurality of entities or parameters that are further detailed with their own name, the meta class, the plurality of attributes, and the plurality of associations. Example: The "HP Compressor system" entity has associations with several parameters like "pipe pressure", "engine", "adequate power delivery", and "system stability".

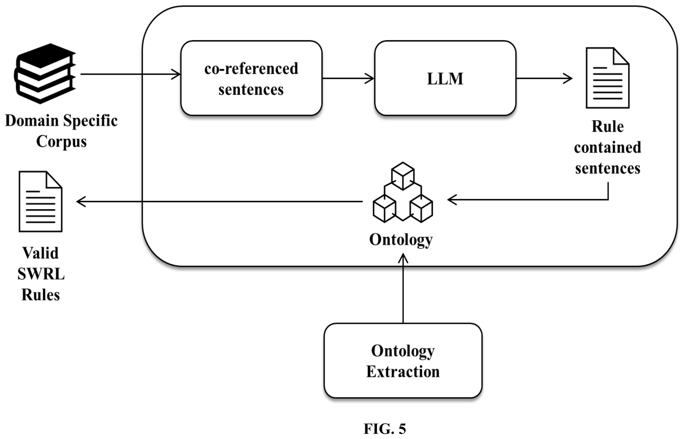

At step 310 of the method 300, the one or more hardware processors 104 are configured to extract the plurality of valid SWRL rules from the ontology and the domain specific corpus. In an embodiment, extracting the plurality of valid SWRL rules from the ontology and the domain specific corpus is explained through steps 310a to 310d. FIG. 5 depicts a block diagram for extracting the plurality of valid Semantic SWRL rules from the ontology and the domain specific corpus.

The method 300 extracts the plurality of valid SWRL rules from the domain specific corpus and using the ontology and. The plurality of valid SWRL rules govern relationships and behaviors defined within the ontology which are crucial for ensuring that the knowledge captured by the ontology is actionable and aligned with business objectives. The system 100 ensures that the plurality of valid SWRL rules are accurately and consistently linked to the generated ontology, reducing the risk of errors and inconsistencies that often arise from manual processes. The plurality of valid SWRL rules are fundamental components of knowledge representation and automated reasoning systems. They serve as logical statements that describe relationships between different conditions and outcomes, enabling systems to derive conclusions based on specific criteria. A typical rule is structured as follows:

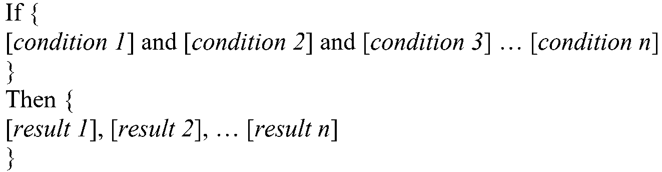

In this structure, the part preceding the "Then" is known as the antecedent (or condition), while the part following it is referred to as the consequent (or result). The antecedent consists of one or more conditions that must be satisfied for the rule to trigger the actions or assertions defined in the consequent. Consider the following rule expressed in SWRL format:
Person(*?x*) ^ hasAge(*?x*, *?age*) ^ swrlb:greaterThan(*?age*, 18) -> Adult(*?x*) ^ Responsible(*?x*)

### Antecedent Explanation:

In this example, the antecedent consists of three conditions:
1. Person(?x): This condition states that there exists an individual denoted by ?x who is classified as a person.
2. hasAge(?x, ?age): This condition indicates that the individual ?x has an associated age value represented by ?age.
3. swrlb:greaterThan(*?age*, 18): This condition asserts that the age of ?x must be greater than 18.

All these conditions must be true for the rule to be applied.

### Consequent Explanation:

The consequent specifies the results that follow when the conditions in the antecedent are satisfied:
1. Adult(?x): This outcome asserts that the individual ?x is categorized as an adult.
2. Responsible(?x): This outcome indicates that the individual ?x is deemed responsible.

If all the conditions in the antecedent hold true, it infer that the individual, ?x is both an adult and responsible, thereby generating the corresponding assertions in the knowledge base.

The generation of the ontology and the extraction of the plurality of valid SWRL rules not only speeds up the process but also enhances the quality and reliability of the results. This integrated approach enables organizations to quickly build a coherent, accurate, and actionable knowledge base from their data, breaking down siloes and facilitating better decision-making, more efficient operations, and improved data governance. Furthermore, because the system 100 is highly adaptable, it can evolve alongside the organization's needs, providing a scalable solution that can grow with the enterprise as data volumes and complexity increase. The disclosed method 300 transforms the way businesses extract and use knowledge from their data, offering a more efficient, scalable, and accurate alternative to traditional manual methods and fragile automated systems. By addressing the inefficiencies inherent in current approaches, the disclosed method 300 empowers organizations to fully capitalize on their data assets, driving innovation, improving performance, and creating new opportunities for growth in the digital age.

At step 310a of the method 300, the one or more hardware processors are configured to preprocess the domain specific corpus to generate a pre-processed text comprising a plurality of sentences. The preprocessing of the domain specific corpus comprises reading from various file formats such as.pdf,.doc,.docx,.txt, and thereof, removing special symbols, eliminating numbers if they appear at the start of text, and removing new-line characters.

At step 310b of the method 300, the one or more hardware processors are configured to join and replaces the plurality of sentences in the generated pre-processed text using the co-reference algorithm, to generate a plurality of co-referenced sentences. The steps of the co-reference algorithm for generating the plurality of co-referenced sentences comprises:
(a) Receiving the plurality of sentences from the pre-processed text.
(b) Extracting a plurality of Parts-Of-Speech (POS) tagged sentences from the plurality of sentences, using one or more NLP libraries.
(c) Identifying an associated plurality of indices of the plurality of POS tagged sentences.
(d) for each of the plurality of sentences:
   (i) Removing a first index of the associated plurality of indices of the plurality of POS tagged sentences.
   (ii) Checking if a sentence index of a current sentence of the plurality of sentences is mapping with the associated plurality of indices of the plurality of POS tagged sentences, wherein upon unsuccessful mapping the current sentence is ignored and moved to a next sentence of the plurality of sentences.
   (iii) Checking if the current sentence of the plurality of sentences is contextually connected to a preceding sentence of plurality of sentences using the LLM, wherein if the response of the LLM is true, the current sentence is merged with the preceding sentence to generate a co-referenced sentence, wherein the plurality of indices of the plurality of POS tagged sentences are shifted down by one, and wherein if the response of the LLM is false the current sentence is ignored and moved to the next sentence of the plurality of sentences.

For example in the plurality of sentences ["The initial activation triggers a surge of electrical impulses that swiftly reach the pump motors, prompting their activation.", "These motors, meticulously calibrated to aviation standards, commence rotation, driving the impellers within the pump chambers to life."] will be ["The initial activation triggers a surge of electrical impulses that swiftly reach the pump motors, prompting their activation. These motors, meticulously calibrated to aviation standards, commence rotation, driving the impellers within the pump chambers to life."]

Here in second sentence "These motors" coreference to "pump motors" from previous sentence, hence they will be contextually connected (joined).
The pseudo code of the co-reference algorithm is as follows:

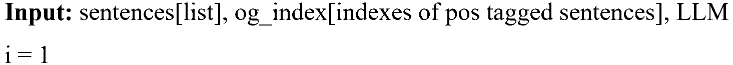

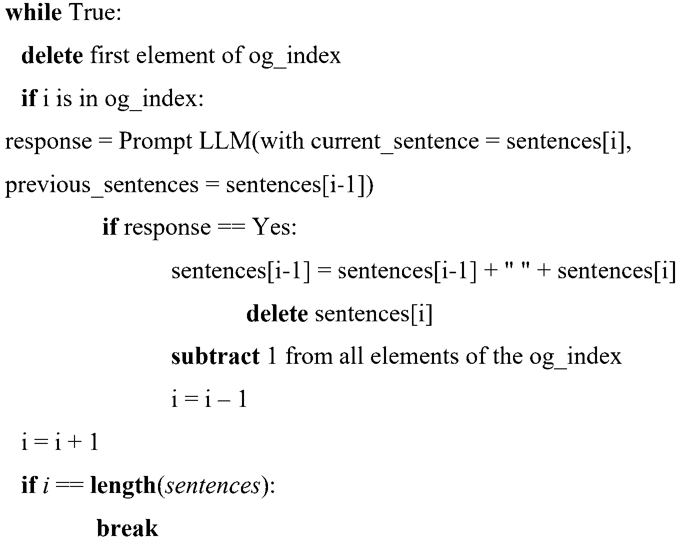

At step 310c of the method 300, the one or more hardware processors are configured to feed the plurality of co-referenced sentences to the LLM, to obtain a plurality of rule contained sentences. The LLM reviews content of each of the plurality of co-referenced sentences to the LLM, assessing its structure and language to identify phrases or constructs that typically contain the plurality of rule contained sentences. These may include conditional phrases (e.g., "if," "when," "provided that") and result indicators (e.g., "then," "therefore," "results in"), etc but not limited to this. There may be cases where the plurality of rule contained sentences are not explicitly mentioned, in such cases, contextual understanding of LLMs comes in handy. Beyond simple keyword matching, the LLM leverages its understanding of context to recognize more complex rule formulations that may not follow conventional language patterns. This ensures that both straightforward and nuanced plurality of rule contained sentences are captured. The outcome of this is a refined set of the text blocks that explicitly contain rules. Blocks identified as containing the plurality of rule contained sentences that are isolated from those that do not meet the criteria, paving the way for further processing in the subsequent stages of the rule extraction.

At step 310d of the method 300, the one or more hardware processors are configured to extract a plurality of intermediate SWRL rules from the plurality of rule contained sentences using a helper schema and a three-shot prompting. The steps for extracting the plurality of intermediate SWRL rules from the plurality of rule contained sentences using the helper schema and the three-shot prompting comprises:
(a) Feeding the plurality of rule contained sentences and a helper prompt of the helper schema, to the LLM, to generate a helper response.
(b) Storing the helper response in an LLM memory.
(c) Receiving a prompt file using the three-shot prompting comprising three pairs of predefined responses.
(d) Feeding the plurality of rule contained sentences, a target prompt, the helper response, and the prompt file to the LLM, to generate a plurality of intermediate SWRL rules.

Three types of schemas are available for the helper prompt that can be used by the LLM to generate the plurality of intermediate SWRL rules. The three types of schemas include: (i) ontology from the plurality of rule containing sentences, this schema component extracts the ontology from the plurality of rule containing sentences, identifying the relevant classes, properties, and relationships between the plurality of entities, this helper prompt schema helps ensure that the plurality of intermediate SWRL rules align with the domain of the ontology, (ii) schema of atoms from the plurality of rule containing sentences: atoms are the building blocks of the plurality of intermediate SWRL rules, representing the basic logical statements within each rule of the plurality of intermediate SWRL rules. The schema of atoms organizes the conditions (antecedents) and results (consequents) identified in the plurality of rule contained sentences into class atoms, property atoms (object property atoms and data property atoms), and SWRL built-in atoms, this structure is essential for generating valid SWRL syntax, (iii) terms and associated terms from the plurality of rule contained sentences, this component identifies key terms and their associated terms from the rule contained sentences, ensuring that the plurality of intermediate SWRL rules are semantically consistent. These terms may include specific entities, parameters, or variables that must be referenced in a SWRL rule of the plurality of intermediate SWRL rules. An example illustrating extraction of the plurality of intermediate SWRL rules is as follows:

```
  {
  "Rule text 1": {
  "Underlying_text": "Firstly, the HP Compressor system must maintain a pipe
 pressure above 20psi when the engine is at or above idle, ensuring adequate power
  delivery and system stability.",
  "SWRL_Rule1": "HPCompressorSystem(?x) ^ maintainsPipePressure(?x,
  ?pressure) ^ hasUnit(?pressure, psi) ^ swrlb:greaterThan(?pressure, 20) ^
  Engine(?y) ^ hasState(?y, idle) ^ swrlb:greaterThanOrEqual(?y, idle) ->
 AdequatePowerDelivery(?x) ^ SystemStability(?x)"
  },
  "Rule text 2": {
  "Underlying_text": "The Control System is tasked with maintaining N2 shaft
  speed within a range of 2% to 100%, essential for optimal engine performance and
 preventing over-speeding or under-speeding conditions.",
  "SWRL_Rule1": "ControlSystem(?cs) ^ N2ShaftSpeed(?cs, ?speed) ^
  hasUnit(?speed, percentage) ^ swrlb:greaterThanOrEqual(?speed, 2) ^
  swrlb:lessThanOrEqual(?speed, 100) -> OptimalEnginePerformance(?cs)",
  "SWRL_Rule2": "ControlSystem(?cs) ^ N2ShaftSpeed(?cs, ?speed) ^
  hasUnit(?speed, percentage) ^ swrlb:greaterThanOrEqual(?speed, 2) ^
  swrlb:lessThanOrEqual(?speed, 100) -> PreventOverSpeedingCondition(?cs)",
  "SWRL_Rule3": "ControlSystem(?cs) ^ N2ShaftSpeed(?cs, ?speed) ^
  hasUnit(?speed, percentage) ^ swrlb:greaterThanOrEqual(?speed, 2) ^
  swrlb:lessThanOrEqual(?speed, 100) -> PreventUnderSpeedingCondition(?cs)"
  }
  }
```

At step 310e of the method 300, the one or more hardware processors are configured to extract the plurality of valid SWRL rules from the plurality of intermediate SWRL rules. The steps for extracting the plurality of valid SWRL rules from the plurality of intermediate SWRL rules comprises:
(a) Obtaining a plurality of names of (i) the plurality of inherited entities, (ii) the plurality of attributes associated with the plurality of inherited entities and the plurality of entities, (iii) the plurality of associations between the plurality of seeds and the plurality of entities, and (iv) the plurality of associations between the plurality of inherited entities and the plurality of entities, from the ontology.
(b) Obtaining a plurality of predicates of the plurality of intermediate SWRL rules.
(c) Creating a plurality of name vector embeddings for the obtained plurality of names, and a plurality of predicate vector embeddings for the obtained plurality of predicates, using the embedding model.
(d) Calculating a plurality of cosine similarity values by performing dot product on the plurality of name vector embeddings and the plurality of predicate vector embeddings.
(e) Selecting a set of plurality of cosine similarity values among the plurality of cosine similarity values that are greater than the predefined threshold value in the configuration file.
(f) Replacing the selected set of plurality of cosine similarity values of respective predicates of the plurality of predicates in the plurality of intermediate SWRL rules, generating a plurality of modified intermediate SWRL rules.
(g) Creating a sub model prompt based on a sub model text file, for each of the plurality of modified intermediate SWRL rules.
(h) Feeding the sub model prompt, to the LLM, wherein the LLM checks for syntax and sematic validation for each of the plurality of modified intermediate SWRL rules, to generate the plurality of valid SWRL rules, and a plurality of invalid SWRL rules, and wherein the plurality of invalid SWRL rules is fed again to the LLM for revalidation.

The plurality of name vector embeddings for the obtained plurality of names, and a plurality of predicate vector embeddings for the obtained plurality of predicates, are created using the embedding model. The embedding model performs an embedding matching process to ensure that the plurality of entities, properties, and relationships defined in the plurality of valid SWRL rules are properly aligned with those in the ontology. This ensures semantic consistency between the rule extraction and the domain-specific knowledge encapsulated by the ontology. The plurality of name vector embeddings is obtained for the plurality of names of the ontology, and the plurality of predicate vector embeddings are obtained for the plurality of predicates of the plurality of intermediate SWRL rules. The plurality of name vector embeddings and the plurality of predicate vector embeddings are high-dimensional vector representations of terms that capture their semantic meaning. This ensures that even if the plurality entities are not aligned with the subject model, a set of the plurality of entities of the plurality of entities will still be aligned.

A plurality of cosine similarity values is calculated by performing dot product on the plurality of name vector embeddings and the plurality of predicate vector embeddings. Cosine similarity measures an angle between the plurality of name vector embeddings and the plurality of predicate vector embeddings, determining how similar the plurality of entities from the plurality of intermediate SWRL rules and ontology are in terms of meaning. If the cosine similarity value exceeds the predefined threshold value, it indicates strong semantic similarity, an intermediate SWRL rule of the plurality of intermediate SWRL rule is aligned with the plurality of entities in the ontology. The set of plurality of cosine similarity values among the plurality of cosine similarity values are selected that are greater than the predefined threshold value in the configuration file. Further the selected set of plurality of cosine similarity values of respective predicates of the plurality of predicates replaced in the plurality of intermediate SWRL rules, generating the plurality of modified intermediate SWRL rules. Example of the plurality of modified intermediate SWRL rules is as follows:
"Rule text 1": {"Underlying_text": "Firstly, the HP Compressor system must maintain a pipe pressure above 20psi when the engine is at or above idle, ensuring adequate power delivery and system stability.","SWRL_Rule1": "HP_Compressor_system(?x) *^* pipe_pressure(?x, ?pressure) *^* hasUnit(?pressure, psi) ^ swrlb:greaterThan(?pressure, 20) *^* engine(?y) *^* hasState(?y, idle) *^* swrlb:greaterThanOrEqual(?y, idle) -> adequate_power_delivery(?x) ^ SystemStability(?x)" },
"Rule text 2": { "Underlying_text": "The Control System is tasked with maintaining N2 shaft speed within a range of 2% to 100%, essential for optimal engine performance and preventing over-speeding or under-speeding conditions.", "SWRL_Rule1": "Control_System(?cs) ^ N2_shaft_speed(?cs, ?speed) ^ hasUnit(?speed, percentage) ^ swrlb:greaterThanOrEqual(?speed, 2) ^ swrlb:lessThanOrEqual(?speed, 100) -> OptimalenginePerformance(?cs)", "SWRL_Rule2": "Control_System(?cs) ^ N2_shaft_speed(?cs, ?speed) ^ hasUnit(?speed, percentage) ^ swrlb:greaterThanOrEqual(?speed, 2) ^ swrlb:lessThanOrEqual(?speed, 100) -> preventing_over_speeding(?cs)", "SWRL_Rule3": "Control_System(?cs) ^ N2_shaft_speed(?cs, ?speed) ^ hasUnit(?speed, percentage) ^ swrlb:greaterThanOrEqual(?speed, 2) ^ swrlb:lessThanOrEqual(?speed, 100) -> preventing_under_speeding(?cs)" }

The sub model prompt is created based on the sub model text file, for each of the plurality of modified intermediate SWRL rules. The sub model text file is obtaining by:
(a) Selecting a top entity from a plurality of hierarchical structured entities of the meta class, the plurality of seeds, the plurality of inherited entities, the plurality of attributes associated with the plurality of inherited entities and the plurality of entities, and the plurality of associations between the plurality of seeds and the plurality of entities, and the plurality of associations between the plurality of inherited entities and the plurality of entities from the ontology, based on the predefined depth in the configuration file.
(b) Slicing the ontology based on the top entity and based on predefined depth from the configuration file to generate a sub model.
(c) Converting the sliced ontology to the sub model text file using a JSON to text converter.

Selection of the top entity from a plurality of hierarchical structured entities of the meta class helps streamline the extraction of the plurality of valid SWRL rules by focusing on the most significant entity within the plurality of intermediate SWRL rules. This ensures that the plurality of valid SWRL rules targets the most relevant sections of the ontology. The top entity selection entity of the plurality of hierarchical structured entities of the meta class is selected based on the predefined depth in the configuration file. When the SWRL rule of the plurality of intermediate SWRL rules contains the plurality of entities, the top entity that plays the most critical role in the SWRL rule is identified. This is typically the entity that drives logic of the SWRL rule or that the SWRL rule directly governs (e.g., the "Control System" in the SWRL rule about managing N2 shaft speed). For selection of the top entity a parameter called the predefined depth is used to control the selection of the top entity from the plurality of entities extracted from the SWRL rule based on a depth hierarchy of ontology. The plurality of entities with a depth greater than the predefined depth are deprioritized, while those with equal or lesser depth are preferred. It helps to navigate hierarchical structure of the plurality of entities by specifying a cutoff depth for an entity selection, ensuring that the top entity selected is not from a deeper (more specific) level than desired. Once the top entity is identified, the ontology is sliced to focus on the top entity and its relationships. By narrowing the scope of the ontology, the rule extraction can concentrate on a smaller, more relevant portion of the ontology, ensuring that the SWRL rule is aligned with the core logic of the top entity. The sliced ontology is converted to the sub model text file using a JSON to text converter.

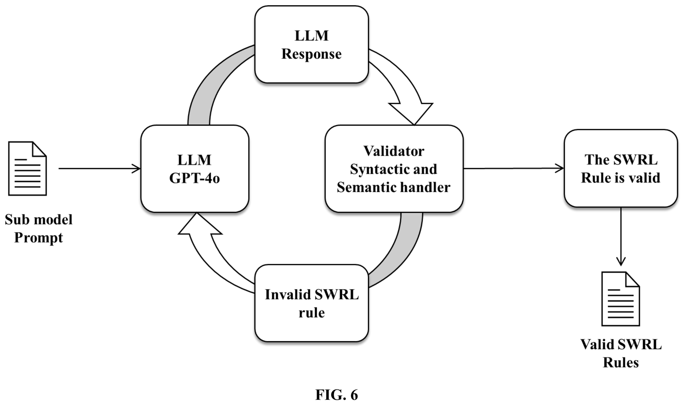

The sub model prompt is fed to the LLM. The LLM checks iteratively for syntax and sematic validation for each of the plurality of modified intermediate SWRL rules, to generate the plurality of valid SWRL rules, and the plurality of invalid SWRL rules, and wherein the plurality of invalid SWRL rules is fed again to the LLM for revalidation. FIG. 6 depicts a block diagram for generation of the plurality of valid SWRL rules, and a plurality of invalid SWRL rules using LLM, according to some embodiments of the present disclosure. This iterative approach ensures that the generated plurality of valid SWRL rules, are both syntactically and contextually correct, further aligning them with the ontology. The LLM refines each of an invalid SWRL rule of the plurality of invalid SWRL rules by adjusting its structure and content to ensure it adheres to the ontology and logical flow.

### Experimental Details:

For experimental analysis the meta model was defined as a framework for representing requirements, entities, and parameters within the system 100. The requirements are formal statements outlining the needs or conditions that the system 100 must meet, with the plurality of attributes such as the attribute name and attribute description. These requirements are associated with the plurality of entities, which represent distinct system components and are characterized by their names and functionalities. The parameters are measurable variables, such as pressure or status, that influence the behaviour of the plurality of entities. The meta model connects the requirements, the plurality of entities, and parameters to provide a comprehensive view of system design and functionality. The ontology extraction takes this meta-model as input in the JSON format. Such a meta-model-based extraction of the ontology or any sort of formal ontology extraction was not available in the literature, however an expert validation of the corpus data is provided as a comparison benchmark as follows:

### Expert Validation (Hierarchy denoted by Level):

(Level 1) Performance Requirement
(Level 2) HP Compressor System
(Level 3) Pipe Pressure
(Level 4) minimum value = 20 psi
(Level 3) Engine
(Level 4) status = "at or above idle"
(Level 3) Adequate Power Delivery
(Level 3) System Stability
(Level 2) Control system
(Level 3) N2 shaft speed
(Level 4) minimum value = 2%
(Level 4) maximum value = 100%
(Level 3) preventing under-speeding
(Level 3) preventing over-speeding
(Level 3) optimal engine performance
(Level 2) Fuel System
(Level 3) Pressure difference readings
(Level 4) maximum value = 10 psi
(Level 3) Proper fuel delivery
(Level 3) Asymmetric pressure readings
(Level 3) Select lowest reading
(Level 3) Idle condition
(Level 2) Airframe
(Level 3) Discrete switch in the cockpit
(Level 3) Passage of fuel from tanks to the engine
(Level 3) Efficient fuel management and control

The experts looked at the significant entities from the text and their associations and attributes and were arranged hierarchically wherein the hierarchy is denoted by the level. The Level 1 would mean the root entity and it represent the broadest field in the ontology. The ontology generated by the disclosed method 300 outlines a performance requirement and its associations with various system entities, requiring minimal manual intervention for corrections. The requirement connects to four main entities: the HP Compressor System, Control System, Fuel System, and Airframe, each characterized by specific parameters. The HP Compressor System includes parameters such as pipe pressure (minimum 20 psi) and engine status (at or above idle), along with considerations for adequate power delivery and system stability. The Control System monitors parameters like N2 shaft speed (ranging from 2% to 100%), ensuring optimal engine performance while preventing under-speeding and over-speeding conditions. The Fuel System addresses parameters such as pressure difference readings (up to 10 psi), proper fuel delivery, and asymmetric pressure readings to maintain stable idle conditions. Lastly, the Airframe includes elements like the discrete switch in the cockpit, the passage of fuel from tanks to the engine, and efficient fuel management and control. The ontology in JSON format is then sent for the extraction of the plurality of valid SWRL rules. The rule extraction process, which utilizes the generated ontology, and the domain specific corpus used to derive subjects from the meta model, results in extraction of the valid SWRL rules that are fully aligned with the ontology. This model, defining key entities like the HP Compressor System, Control System, Fuel System, and Airframe, provides the necessary structure and context for accurate rule formulation. The ontology extraction was able to identify all the elements present in the text. However, it also identified some extra entities incorrectly and identified some extra associations which were not present in the domain specific corpus as depicted in Table 1:

**Table: 1**

| | **Human Expert** | **Ontology Extraction** | **Hierarchy mismatch w.r.t. Human expert** |
|---|---|---|---|
| **Elements identified** | 26 | 26 | 8 |

By leveraging the plurality of entities of the ontology and their associated parameters, the rule extraction generates the plurality of valid SWRL rules that directly reflect the system's requirements, such as maintaining pipe pressure, controlling N2 shaft speed, managing fuel pressure, and ensuring cockpit fuel control. The plurality of valid SWRL rules are consistent with ontology as depicted in Table. 2, ensuring precise correspondence between the extracted system behaviours and the rules in SWRL format. This alignment guarantees the integrity and accuracy of the rules for automated reasoning and system validation.

**Table.2**

| | **Human Expert** | **Rule Extraction** | **Coherent with Ontology** |
|---|---|---|---|
| **Rules Extracted** | 7 | 7 | 7 |

The plurality of valid SWRL rules is identified as human expert and all the identified plurality of the valid SWRL rules are coherent with respect to the ontology.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Creating ontologies, whether from general world knowledge or the domain-specific corpora, has traditionally been a time-intensive process requiring significant expert intervention. This manual approach is not only labor-intensive but also prone to errors. Automated ontology extraction methods discussed in the literature typically rely on rule-based techniques. However, these approaches struggle to scale effectively as the underlying data evolves. Embodiments herein provide a method and system for generation of the ontology and extracting the associated rules using meta-models. The method comprises user defining a domain using the meta-model in a JavaScript Object Notation (JSON) format for tailored and precise generation of the ontology. A plurality of prompts is generated using the meta-model, a configuration file, and a domain specific corpus, and processed using a large language model (LLM) to generate the ontology. Further the generated ontology along with the domain specific corpus is used to extract associated rules effectively.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), the method comprising:
receiving (302), via one or more hardware processors, a configuration file, a domain specific corpus, and a meta-model pertaining to a domain comprising a subject area, and a plurality of entities, wherein a structure of the subject area comprises a plurality of seeds, a meta class, a subject area definition, a plurality of attributes, a plurality of associations, an inheritable flag, wherein the structure of plurality of entities comprises a plurality of entity names, the meta class, a plurality of entity definitions, the plurality of attributes, the plurality of associations, wherein the plurality of attributes comprises a plurality of attribute names, a plurality of attribute definitions, wherein the plurality of associations comprises a plurality of association names, a plurality of association definitions, a plurality of source role names, a plurality of target role names, a plurality of target entity names, a plurality of cardinality values, and wherein the configuration file comprises a domain name, a subclass depth, a self-association depth, a chunk parameter, a predefined depth, and a predefined threshold value;
creating (304), via the one or more hardware processors, a plurality of prompts comprising a subject area prompt, an inherited entities prompt, an attributes prompt, an associations prompt, and a list validation prompt, using the meta-model, the configuration file, and the domain specific corpus by:
creating (304a) the subject area prompt by replacing an entity class, a definition, and the domain, in a predefined subject area prompt template, using the meta-model and the configuration file, wherein the created subject area prompt is fed to a Large Language Model (LLM) to extract the plurality of seeds;
creating (304b) the inherited entities prompt based on the subclass depth in the configuration file and if the inheritable flag is enabled in the meta-model, by replacing the entity class, the definition, a parent name, and the domain in a predefined inherited entities prompt template, using the meta-model and the configuration file, wherein the created inherited entities prompt is fed to the LLM, to extract a plurality of inherited entities;
creating (304c) the association prompt based on the self-association depth in the configuration file, and the meta class, and the plurality of target entity names in the meta model, by replacing an association name, the definition, the source class, a target class, a target role, a source role, a source entity name, a cardinality, and the domain, in a predefined association prompt template using the meta-model and the configuration file, wherein the created association prompt is fed to the LLM, to extract the plurality of associations between (i) the plurality of seeds and the plurality of entities, and (ii) the plurality of inherited entities and the plurality of entities;
creating (304d) the attribute prompt by replacing the definition, an attribute, the meta class name, an entity, and the domain, in a predefined attributes prompt template, using the meta-model and the configuration file, wherein the created attribute prompt is fed to the LLM, to extract the plurality of attributes associated with the plurality of inherited entities and the plurality of entities; and
creating (304e) the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities;
feeding (306), via the one or more hardware processors, the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate a plurality of validation LLM responses;
generating (308), via the one or more hardware processors, an ontology upon successful validation of the plurality of validation LLM responses, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model; and
extracting (310), via the one or more hardware processors, a plurality of valid Semantic Web Rule Language (SWRL) rules from the ontology and the domain specific corpus by:
preprocessing (310a) the domain specific corpus to generate a pre-processed text comprising a plurality of sentences;
joining (310b) and replacing the plurality of sentences in the generated pre-processed text using a co-reference algorithm, to generate a plurality of co-referenced sentences;
feeding (310c) the plurality of co-referenced sentences to the LLM, to obtain a plurality of rule contained sentences;
extracting (310d) a plurality of intermediate SWRL rules from the plurality of rule contained sentences using a helper schema and a three-shot prompting; and
extracting (310e) the plurality of valid SWRL rules from the plurality of intermediate SWRL rules.

2. The processor implemented method as claimed in claim 1, wherein if the plurality of seeds is an empty list in the meta-model, then the plurality of seeds is extracted using the subject area prompt, wherein the plurality of vector embeddings is generated from the domain specific corpus using an embedding model based on the availability of the domain specific corpus, and wherein the generated plurality of vector embeddings of the domain specific corpus and the chunk parameter in the configuration file are used in creating the plurality of prompts, wherein creating the subject area prompt comprises replacing (i) the entity class in the predefined subject area prompt template with the meta class from the meta-model, (ii) the definition in the predefined subject area prompt template with the subject area definition from the meta-model, and (iii) the domain in the predefined subject area prompt template with the domain name from the configuration file,
wherein if subclass depth is one in the configuration file, creating the inherited entities prompt comprises replacing (i) the entity class in a predefined inherited entities prompt template with the meta class from the meta-model, (ii) the definition in the predefined inherited entities prompt template with the subject area definition from the meta-model, (iii) the parent name in the predefined inherited entities prompt template with the plurality of seeds from the meta-model, and (iv) the domain in the predefined inherited entities prompt template with the domain name from the configuration file,
wherein if the subclass depth in the configuration file is greater than one, creating the inherited entities prompt comprises replacing (i) the entity class in the predefined inherited entities prompt template with the meta class from the meta-model, (ii) the definition in the predefined inherited entities prompt template with the subject area definition from the meta-model, (iii) the parent name in the predefined inherited entities prompt template with each the plurality of inherited entities, and (iv) the domain in the predefined inherited entities prompt template with the domain name from the configuration file,
wherein creating the association prompt comprises replacing (i) the association name in the predefined association prompt template with each of the plurality of association names from the meta-model, (ii) the definition in the predefined association prompt template with each of the plurality of association definitions from the meta-model, (iii) the source class in the predefined association prompt template with the meta class from the meta-model, (iv) the target class, the target role, the source role, the cardinality in the predefined association prompt template with each of the plurality of target entity names, each of the plurality of target role names, each of plurality of the source role names, and each of the plurality of cardinality values from the meta-model, (v) the source entity name in the predefined association prompt template with the plurality of seeds and the plurality of inherited entities, and (vi) the domain in the predefined association prompt template with the domain name from the configuration file, and
wherein creating the attribute prompt comprises replacing (i) the definition in the predefined attribute prompt template with each of the plurality of entity definitions from the meta-model, (ii) the attribute in the predefined attribute prompt template with each of the plurality of attribute names and each of the plurality of attribute definitions from the meta-model, (iii) the meta class name in the predefined attribute prompt template with the each of the plurality of entity names from the meta-model, (iv) the entity in the predefined attribute prompt template with each of the plurality of associations between (a) the plurality of seeds and the plurality of entities, and (b) the plurality of inherited entities and the plurality of entities, and (v) the domain in a predefined attribute prompt template with the domain name from the configuration file.

3. The processor implemented method as claimed in claim 1, wherein the ontology comprises the meta class, the plurality of seeds, the plurality of inherited entities, the plurality of attributes associated with the plurality of inherited entities and the plurality of entities, and the plurality of associations between the plurality of seeds and the plurality of entities, and the plurality of associations between the plurality of inherited entities and the plurality of entities.

4. The processor implemented method as claimed in claim 1, wherein the steps of the co-reference algorithm for generating the plurality of co-referenced sentences comprises:
receiving the plurality of sentences from the pre-processed text;
extracting a plurality of Parts-Of-Speech (POS) tagged sentences from the plurality of sentences, using one or more Natural Language Processing (NLP) libraries;
identifying an associated plurality of indices of the plurality of POS tagged sentences; and
for each of the plurality of sentences:
removing a first index of the associated plurality of indices of the plurality of POS tagged sentences;
checking if a sentence index of a current sentence of the plurality of sentences is mapping with the associated plurality of indices of the plurality of POS tagged sentences, wherein upon unsuccessful mapping the current sentence is ignored and moved to a next sentence of the plurality of sentences; and
checking if the current sentence of the plurality of sentences is contextually connected to a preceding sentence of plurality of sentences using the LLM, wherein if the response of the LLM is true, the current sentence is merged with the preceding sentence to generate a co-referenced sentence, wherein the plurality of indices of the plurality of POS tagged sentences are shifted down by one, and wherein if the response of the LLM is false the current sentence is ignored and moved to the next sentence of the plurality of sentences.

5. The processor implemented method as claimed in claim 1, wherein extracting the plurality of intermediate SWRL rules from the plurality of rules contained sentences using the helper schema and the three-shot prompting comprises:
feeding the plurality of rules contained sentences and a helper prompt of the helper schema, to the LLM, to generate a helper response; storing the helper response in an LLM memory;
receiving a prompt file using the three-shot prompting comprising three pairs of predefined responses; and
feeding the plurality of rule contained sentences, a target prompt, the helper response, and the prompt file to the LLM, to generate a plurality of intermediate SWRL rules.

6. The processor implemented method as claimed in claim 1, wherein extracting the plurality of valid SWRL rules from the plurality of intermediate SWRL rules comprises:
obtaining a plurality of names of (i) the plurality of inherited entities, (ii) the plurality of attributes associated with the plurality of inherited entities and the plurality of entities, (iii) the plurality of associations between the plurality of seeds and the plurality of entities, and (iv) the plurality of associations between the plurality of inherited entities and the plurality of entities, from the ontology;
obtaining a plurality of predicates of the plurality of intermediate SWRL rules;
creating a plurality of name vector embeddings for the obtained plurality of names, and a plurality of predicate vector embeddings for the obtained plurality of predicates, using the embedding model;
calculating a plurality of cosine similarity values by performing dot product on the plurality of name vector embeddings and the plurality of predicate vector embeddings;
selecting a set of plurality of cosine similarity values among the plurality of cosine similarity values that are greater than the predefined threshold value in the configuration file;
replacing the selected set of plurality of cosine similarity values of respective predicates of the plurality of predicates in the plurality of intermediate SWRL rules, generating a plurality of modified intermediate SWRL rules;
creating a sub model prompt based on a sub model text file, for each of the plurality of modified intermediate SWRL rules; and
feeding the sub model prompt, to the LLM, wherein the LLM checks for syntax and sematic validation for each of the plurality of modified intermediate SWRL rules, to generate the plurality of valid SWRL rules, and a plurality of invalid SWRL rules, and wherein the plurality of invalid SWRL rules is fed again to the LLM for revalidation.

7. The processor implemented method as claimed in claim 6, wherein the sub model text file is obtained by:
selecting a top entity from a plurality of hierarchical structured entities of the meta class, the plurality of seeds, the plurality of inherited entities, the plurality of attributes associated with the plurality of inherited entities and the plurality of entities, and the plurality of associations between the plurality of seeds and the plurality of entities, and the plurality of associations between the plurality of inherited entities and the plurality of entities from the ontology, based on the predefined depth in the configuration file;
slicing the ontology based on the top entity and based on predefined depth from the configuration file to generate a sub model; and
converting the sliced ontology to the sub model text file using a JSON to text converter.

8. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a configuration file, a domain specific corpus, and a meta-model pertaining to a domain comprising a subject area, and a plurality of entities, wherein a structure of the subject area comprises a plurality of seeds, a meta class, a subject area definition, a plurality of attributes, a plurality of associations, an inheritable flag, wherein the structure of plurality of entities comprises a plurality of entity names, the meta class, a plurality of entity definitions, the plurality of attributes, the plurality of associations, wherein the plurality of attributes comprises a plurality of attribute names, a plurality of attribute definitions, wherein the plurality of associations comprises a plurality of association names, a plurality of association definitions, a plurality of source role names, a plurality of target role names, a plurality of target entity names, a plurality of cardinality values, and wherein the configuration file comprises a domain name, a subclass depth, a self-association depth, a chunk parameter, a predefined depth, and a predefined threshold value;
create a plurality of prompts comprising a subject area prompt, an inherited entities prompt, an attributes prompt, an associations prompt, and a list validation prompt, using the meta-model, the configuration file, and the domain specific corpus by:
creating the subject area prompt by replacing an entity class, a definition, and the domain, in a predefined subject area prompt template, using the meta-model and the configuration file, wherein the created subject area prompt is fed to a Large Language Model (LLM) to extract the plurality of seeds;
creating the inherited entities prompt based on the subclass depth in the configuration file and if the inheritable flag is enabled in the meta-model, by replacing the entity class, the definition, a parent name, and the domain in a predefined inherited entities prompt template, using the meta-model and the configuration file, wherein the created inherited entities prompt is fed to the LLM, to extract a plurality of inherited entities;
creating the association prompt based on the self-association depth in the configuration file, and the meta class, and the plurality of target entity names in the meta model, by replacing an association name, the definition, the source class, a target class, a target role, a source role, a source entity name, a cardinality, and the domain, in a predefined association prompt template using the meta-model and the configuration file, wherein the created association prompt is fed to the LLM, to extract the plurality of associations between (i) the plurality of seeds and the plurality of entities, and (ii) the plurality of inherited entities and the plurality of entities;
creating the attribute prompt by replacing the definition, an attribute, the meta class name, an entity, and the domain, in a predefined attributes prompt template, using the meta-model and the configuration file, wherein the created attribute prompt is fed to the LLM, to extract the plurality of attributes associated with the plurality of inherited entities and the plurality of entities; and
creating the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities;
feed the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate a plurality of validation LLM responses;
generate an ontology upon successful validation based on the plurality of validation LLM responses, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model; and
extract a plurality of valid Semantic Web Rule Language (SWRL) rules from the ontology and the domain specific corpus by: preprocessing the domain specific corpus to generate a pre-processed text comprising a plurality of sentences;
joining and replacing the plurality of sentences in the generated pre-processed text using a co-reference algorithm, to generate a plurality of co-referenced sentences;
feeding the plurality of co-referenced sentences to the LLM, to obtain a plurality of rule contained sentences;
extracting a plurality of intermediate SWRL rules from the plurality of rule contained sentences using a helper schema and a three-shot prompting; and
extracting the plurality of valid SWRL rules from the plurality of intermediate SWRL rules.

9. The system as claimed in claim 8, wherein if the plurality of seeds is an empty list in the meta-model, then the plurality of seeds is extracted using the subject area prompt, wherein the plurality of vector embeddings is generated from the domain specific corpus using an embedding model based on the availability of the domain specific corpus, and wherein the generated plurality of vector embeddings of the domain specific corpus, and the chunk parameter in the configuration file are used in creating the plurality of prompts,
wherein creating the subject area prompt comprises replacing (i) the entity class in the predefined subject area prompt template with the meta class from the meta-model, (ii) the definition in the predefined subject area prompt template with the subject area definition from the meta-model, and (iii) the domain in the predefined subject area prompt template with the domain name from the configuration file,
wherein if subclass depth is one in the configuration file, creating the inherited entities prompt comprises replacing (i) the entity class in a predefined inherited entities prompt template with the meta class from the meta-model, (ii) the definition in the predefined inherited entities prompt template with the subject area definition from the meta-model, (iii) the parent name in the predefined inherited entities prompt template with the plurality of seeds from the meta-model, and (iv) the domain in the predefined inherited entities prompt template with the domain name from the configuration file,
wherein if the subclass depth in the configuration file is greater than one, creating the inherited entities prompt comprises replacing (i) the entity class in the predefined inherited entities prompt template with the meta class from the meta-model, (ii) the definition in the predefined inherited entities prompt template with the subject area definition from the meta-model, (iii) the parent name in the predefined inherited entities prompt template with each the plurality of inherited entities, and (iv) the domain in the predefined inherited entities prompt template with the domain name from the configuration file,
wherein creating the association prompt comprises replacing (i) the association name in the predefined association prompt template with each of the plurality of association names from the meta-model, (ii) the definition in the predefined association prompt template with each of the plurality of association definitions from the meta-model, (iii) the source class in the predefined association prompt template with the meta class from the meta-model, (iv) the target class, the target role, the source role, the cardinality in the predefined association prompt template with each of the plurality of target entity names, each of the plurality of target role names, each of plurality of the source role names, and each of the plurality of cardinality values from the meta-model, (v) the source entity name in the predefined association prompt template with the plurality of seeds and the plurality of inherited entities, and (vi) the domain in the predefined association prompt template with the domain name from the configuration file, and
wherein creating the attribute prompt comprises replacing (i) the definition in the predefined attribute prompt template with each of the plurality of entity definitions from the meta-model, (ii) the attribute in the predefined attribute prompt template with each of the plurality of attribute names and each of the plurality of attribute definitions from the meta-model, (iii) the meta class name in the predefined attribute prompt template with the each of the plurality of entity names from the meta-model, (iv) the entity in the predefined attribute prompt template with each of the plurality of associations between (a) the plurality of seeds and the plurality of entities, and (b) the plurality of inherited entities and the plurality of entities, and (v) the domain in a predefined attribute prompt template with the domain name from the configuration file.

10. The system as claimed in claim 8, wherein the ontology comprises the meta class, the plurality of seeds, the plurality of inherited entities, the plurality of attributes associated with the plurality of inherited entities and the plurality of entities, and the plurality of associations between the plurality of seeds and the plurality of entities, and the plurality of associations between the plurality of inherited entities and the plurality of entities.

11. The system as claimed in claim 8, wherein the steps of the co-reference algorithm for generating the plurality of co-referenced sentences comprises:
receiving the plurality of sentences from the pre-processed text;
extracting a plurality of Parts-Of-Speech (POS) tagged sentences from the plurality of sentences, using one or more Natural Language Processing (NLP) libraries;
identifying an associated plurality of indices of the plurality of POS tagged sentences; and
for each of the plurality of sentences:
removing a first index of the associated plurality of indices of the plurality of POS tagged sentences;
checking if a sentence index of a current sentence of the plurality of sentences is mapping with the associated plurality of indices of the plurality of POS tagged sentences, wherein upon unsuccessful mapping the current sentence is ignored and moved to a next sentence of the plurality of sentences; and
checking if the current sentence of the plurality of sentences is contextually connected to a preceding sentence of plurality of sentences using the LLM, wherein if the response of the LLM is true, the current sentence is merged with the preceding sentence to generate a co-referenced sentence, wherein the plurality of indices of the plurality of POS tagged sentences are shifted down by one, and wherein if the response of the LLM is false the current sentence is ignored and moved to the next sentence of the plurality of sentences.

12. The system as claimed in claim 9, wherein extracting the plurality of intermediate SWRL rules from the plurality of rule contained sentences using the helper schema and the three-shot prompting comprises:
feeding the plurality of rule contained sentences and a helper prompt of the helper schema, to the LLM, to generate a helper response;
storing the helper response in an LLM memory;
receiving a prompt file using the three-shot prompting comprising three pairs of predefined responses; and
feeding the plurality of rule contained sentences, a target prompt, the helper response, and the prompt file to the LLM, to generate a plurality of intermediate SWRL rules.

13. The system as claimed in claim 8, wherein extracting the plurality of valid SWRL rules from the plurality of intermediate SWRL rules comprises:
obtaining a plurality of names of (i) the plurality of inherited entities, (ii) the plurality of attributes associated with the plurality of inherited entities and the plurality of entities, (iii) the plurality of associations between the plurality of seeds and the plurality of entities, and (iv) the plurality of associations between the plurality of inherited entities and the plurality of entities, from the ontology;
obtaining a plurality of predicates of the plurality of intermediate SWRL rules;
creating a plurality of name vector embeddings for the obtained plurality of names, and a plurality of predicate vector embeddings for the obtained plurality of predicates, using the embedding model;
calculating a plurality of cosine similarity values by performing dot product on the plurality of name vector embeddings and the plurality of predicate vector embeddings;
selecting a set of plurality of cosine similarity values among the plurality of cosine similarity values that are greater than the predefined threshold value in the configuration file;
replacing the selected set of plurality of cosine similarity values of respective predicates of the plurality of predicates in the plurality of intermediate SWRL rules, generating a plurality of modified intermediate SWRL rules; and
creating a sub model prompt based on a sub model text file, for each of the plurality of modified intermediate SWRL rules; and feeding the sub model prompt, to the LLM, wherein the LLM checks for syntax and sematic validation for each of the plurality of modified intermediate SWRL rules, to generate a plurality of valid SWRL rules, and a plurality of invalid SWRL rules, and wherein the plurality of invalid SWRL rules is fed again to the LLM for revalidation.

14. The system as claimed in claim 13, wherein the sub model text file is obtained by:
selecting a top entity from a plurality of hierarchical structured entities of the meta class, the plurality of seeds, the plurality of inherited entities, the plurality of attributes associated with the plurality of inherited entities and the plurality of entities, and the plurality of associations between the plurality of seeds and the plurality of entities, and the plurality of associations between the plurality of inherited entities and the plurality of entities from the ontology, based on the predefined depth in the configuration file;
slicing the ontology based on the top entity and based on predefined depth from the configuration file to generate a sub model; and
converting the sliced ontology to the sub model text file using a JSON to text converter.

15. One or more non-transitory machine-readable information storage mediums comprising one or more instructions which when executed by one or more hardware processors cause:
receiving a configuration file, a domain specific corpus, and a meta-model pertaining to a domain further comprising a subject area, and a plurality of entities, wherein a structure of the subject area comprises a plurality of seeds, a meta class, a subject area definition, a plurality of attributes, a plurality of associations, an inheritable flag, wherein the structure of plurality of entities comprises a plurality of entity names, the meta class, a plurality of entity definitions, the plurality of attributes, the plurality of associations, wherein the plurality of attributes comprises a plurality of attribute names, a plurality of attribute definitions, wherein the plurality of associations comprises a plurality of association names, a plurality of association definitions, a plurality of source role names, a plurality of target role names, a plurality of target entity names, a plurality of cardinality values, and wherein the configuration file comprises a domain name, a subclass depth, a self-association depth, a chunk parameter, a predefined depth, and a predefined threshold value;
creating a plurality of prompts further comprising a subject area prompt, an inherited entities prompt, an attributes prompt, an associations prompt, and a list validation prompt, using the meta-model, the configuration file, and the domain specific corpus by:
creating the subject area prompt by replacing an entity class, a definition, and the domain, in a predefined subject area prompt template, using the meta-model and the configuration file, wherein the created subject area prompt is fed to a Large Language Model (LLM) to extract the plurality of seeds;
creating the inherited entities prompt based on the subclass depth in the configuration file and if the inheritable flag is enabled in the meta-model, by replacing the entity class, the definition, a parent name, and the domain in a predefined inherited entities prompt template, using the meta-model and the configuration file, wherein the created inherited entities prompt is fed to the LLM, to extract a plurality of inherited entities;
creating the association prompt based on the self-association depth in the configuration file, and the meta class, and the plurality of target entity names in the meta model, by replacing an association name, the definition, the source class, a target class, a target role, a source role, a source entity name, a cardinality, and the domain, in a predefined association prompt template using the meta-model and the configuration file, wherein the created association prompt is fed to the LLM, to extract the plurality of associations between (i) the plurality of seeds and the plurality of entities, and (ii) the plurality of inherited entities and the plurality of entities;
creating the attribute prompt by replacing the definition, an attribute, the meta class name, an entity, and the domain, in a predefined attributes prompt template, using the meta-model and the configuration file, wherein the created attribute prompt is fed to the LLM, to extract the plurality of attributes associated with the plurality of inherited entities and the plurality of entities; and
creating the list validation prompt by replacing the meta class name in a predefined validation prompt template with the meta class in the meta-model, and using the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities;
feeding the list validation prompt to the LLM, to validate the plurality of seeds, the plurality of inherited entities, the plurality of attributes associated with the plurality of inherited entities and the plurality of entities, the plurality of associations between the plurality of seeds and the plurality of entities, and the plurality of associations between the plurality of inherited entities and the plurality of entities, to generate a plurality of validation LLM responses;
generating , an ontology upon successful validation of the plurality of validation LLM responses, using the plurality of seeds, plurality of inherited entities, the plurality of attributes associated with the plurality of inherited entities and plurality of entities, the plurality of associations between the plurality of seeds and plurality of entities, and the plurality of associations between the plurality of inherited entities and the plurality of entities, and structure of the meta-model; and
extracting a plurality of valid Semantic Web Rule Language (SWRL) rules from the ontology and the domain specific corpus by:
preprocessing the domain specific corpus to generate a pre-processed text further comprising a plurality of sentences;
joining and replacing the plurality of sentences in the generated pre-processed text using a co-reference algorithm, to generate a plurality of co-referenced sentences;
feeding the plurality of co-referenced sentences to the LLM, to obtain a plurality of rule contained sentences;
extracting a plurality of intermediate SWRL rules from the plurality of rule contained sentences using a helper schema and a three-shot prompting; and
extracting the plurality of valid SWRL rules from the plurality of intermediate SWRL rules.
